# EUROPÄISCHE PATENTSCHRIFT

(11) **EP 3 108 174 B1**
(45) Veröffentlichungstag und Bekanntmachung des Hinweises auf die Patenterteilung: **30.09.2020**
(21) Anmeldenummer: 15702290.6
(22) Anmeldetag: 04.02.2015
(51) Int. Cl.: F21S 41/176, F21S 41/24, F21S 41/36, F21S 41/33, F21S 41/365, F21S 41/16

(54) **BELEUCHTUNGSVORRICHTUNG MIT KONVERSIONSEINRICHTUNG**
LIGHTING APPARATUS WITH CONVERSION DEVICE
DISPOSITIF D'ÉCLAIRAGE ÉQUIPÉ D'UN MOYEN DE CONVERSION

(30) Priorität: 17.02.2014 DE 102014202863
(43) Veröffentlichungstag der Anmeldung: 28.12.2016
(73) Patentinhaber: OSRAM Beteiligungsverwaltung GmbH, 82031 Grünwald (DE)
(72) Erfinder: HADRATH, Stefan, 14612 Falkensee (DE)
(74) Vertreter: Kanzian, Tanja
(86) Internationale Anmeldenummer: PCT/EP2015/052288
(87) Internationale Veröffentlichungsnummer: WO 2015/121123

(56) Entgegenhaltungen:
- WO-A1-2009/131126
- WO-A1-2013/094590
- DE-A1-102010 062 460
- US-A1- 2012 063 157
- US-A1- 2013 003 400
- US-A1- 2013 027 962
- US-A1- 2014 022 512

## Beschreibung

Die Erfindung betrifft eine Beleuchtungsvorrichtung, aufweisend mindestens eine Primärlichtquelle zur Erzeugung von Primärlicht, einen Reflektor mit zwei beabstandeten Brennflecken, eine der mindestens einen Primärlichtquelle nachgeschaltete Leitoptik zum Leiten des Primärlichts zu einem ersten Brennfleck des Reflektors und eine Konversionseinrichtung zum Konvertieren des Primärlichts in Sekundärlicht unterschiedlicher Wellenlänge. Die Erfindung ist insbesondere anwendbar auf den Bereich der Fahrzeugbeleuchtungen, insbesondere Außenbeleuchtung, z.B. zum Erzeugen eines Zusatzlichts, eines Tagfahrlichts usw.

Es sind Beleuchtungsvorrichtungen mit Leuchtdioden ("LEDs") als Lichtquellen bekannt, welche mittels eines wellenlängenkonvertierenden Leuchtstoffs von den LEDs erzeugtes blaues Primärlicht teilweise in gelbes Licht umwandeln und ein blaugelbes bzw. weißes Mischlicht erzeugen. Das weiße Mischlicht kann z.B. zur Erzeugung von Fahrlichtfunktionen (Abblendlicht, Fernlicht, Kurvenlicht) von Personenkraftwägen verwendet werden. Jedoch sind die erzielbaren Leuchtdichten vergleichsweise gering.

Die Druckschrift WO 2009/131126 A1 offenbart eine Fahrzeugleuchte mit einer Halbleiterlichtquelle und Leuchtstoff sowie einem wellenlängensensitiven Filter und einer Optik zum Reflektieren von Licht. Die Druckschrift US 2013/0003400 A1 offenbart einen Fahrzeugscheinwerfer mit Leuchtstoffmaterial, einem Reflektor, der vom Leuchtstoffmaterial emittiertes Licht aus dem Fahrzeugscheinwerfer reflektiert, und einem Miniaturspiegel, der Licht vom Leuchtstoffmaterial, das nicht am Reflektor reflektiert wurde, zurück zum Leuchtstoffmaterial reflektiert. Die Druckschrift US 2014/0022512 A1 offenbart eine leuchtstoffbasierte Lampe mit Leuchtstoff und Anregungslichtquelle in Form einer LED oder eines Lasers, sowie einem reflektierenden Kranz zum Recyceln von Licht, das unter großem Winkel emittiert wird. Die Schrift US 2013/0027962 A1 offenbart einen Fahrzeugscheinwerfer mit einer Halbleiterlichtquelle, die Laserlicht emittiert, und einem lichtemittierenden Bereich, der sowohl Laserlicht als auch mittels Leuchtstoff wellenlängenkonvertiertes Licht emittiert, sowie einer Diffusionsplatte, die Laserlicht und wellenlängenkonvertiertes Licht mischt. Die Druckschrift WO 2013/094590 A1 offenbart eine Beleuchtungseinrichtung für ein Fahrzeug mit einer Lichtquelle, einem Lichtwellenlängenkonversionselement und mit einer Optik zur Beleuchtung des Lichtwellenlängenkonversionselements mit Licht von der Lichtquelle.

Es ist die **Aufgabe** der vorliegenden Erfindung, die Nachteile des Standes der Technik zumindest teilweise zu überwinden und insbesondere eine Möglichkeit zur Erzeugung von wellenlängenumgewandeltem Licht mit einer höheren Leuchtdichte bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch eine Beleuchtungsvorrichtung, aufweisend mindestens eine Primärlichtquelle zur Erzeugung von Primärlicht, einen Reflektor mit zwei voneinander beabstandeten Brennflecken, eine der mindestens einen Primärlichtquelle nachgeschaltete Optik (im Folgenden ohne Beschränkung der Allgemeinheit als "Leitoptik" bezeichnet) zum Leiten des Primärlichts zu einem ersten Brennfleck des Reflektors und eine Konversionseinrichtung zum Konvertieren des Primärlichts in Sekundärlicht unterschiedlicher Wellenlänge, welche Konversionseinrichtung sich an dem zweiten Brennfleck befindet. Der Reflektor weist einen ersten reflektierenden Teilbereich, dem die zwei Brennflecken zugeordnet sind, und einen zweiten reflektierenden Teilbereich, welcher ein für den zweiten Brennfleck rückreflektierender Teilbereich ist, auf. Das von der mindestens einen Primärlichtquelle abgestrahlte Primärlicht fällt auf den ersten Teilbereich.

Diese Beleuchtungsvorrichtung weist den Vorteil auf, dass von der Konversionseinrichtung auf den zweiten Teilbereich des Reflektors zurückgestrahltes Licht wieder in die Konversionseinrichtung reflektiert wird und somit wieder verwertbar ist.

In einer Weiterbildung wird das von der mindestens einen Primärlichtquelle erzeugte Primärlicht mittels der Leitoptik zu dem ersten Brennfleck geleitet und trifft von dort kommend auf den ersten Teilbereich. Das Primärlicht wird mittels des ersten Teilbereichs auf den zweiten Brennfleck reflektiert. Da sich an dem zweiten Brennfleck die Konversionseinrichtung befindet, wird das dort eintreffende Primärlicht zumindest teilweise in Sekundärlicht von typischerweise größerer Wellenlänge umgewandelt. Von der Konversionseinrichtung kann ein Teil des Primärlichts und des Sekundärlichts zurück in den Reflektor abgestrahlt werden. Falls das Licht auf den zweiten Teilbereich des Reflektors trifft, wird es wieder zurück auf die Konversionseinrichtung geworfen. In dem Licht enthaltenes Primärlicht mag dann in Sekundärlicht umgewandelt werden, ein Sekundärlichtanteil mag z.B. als Teil eines Nutzlichts weiterverwendet werden.

Die Beleuchtungsvorrichtung mag als ein Modul oder, falls es z.B. mit einer Elektronik zum Betreiben der mindestens einen Lichtquelle ausgerüstet ist, als sog. Light Engine vorliegen. Die Beleuchtungsvorrichtung mag mindestens ein optisches Element aufweisen, das der Konversionseinrichtung optisch nachgeschaltet ist. Das mindestens eine optische Element wirkt auf das von der Konversionseinrichtung abgestrahlte Nutzlicht. Das mindestens eine optische Element mag beispielsweise mindestens einen Reflektor, z.B. parabolischen Reflektor, Linse, Blende, Diffusor usw. aufweisen.

Das Primärlicht ist bevorzugt Licht kurzer Wellenlänge, z.B. blaues Licht oder UV-Licht.

Unter einem Brennfleck mag insbesondere ein typischerweise kleiner Bereich um einen Brennpunkt verstanden werden, bei dem von ihm ausgestrahltes Licht mittels des Reflektors in einen ungefähr ebenso kleinen Bereich um den anderen Brennpunkt reflektiert wird. Im vorliegenden Fall ist es zur Vermeidung von Lichtverlusten und damit zur Erhöhung einer Leuchtdichte vorteilhaft, dass die Brennflecke so dimensioniert sind, dass ein von dem ersten Brennfleck auf den Reflektor gestrahlter Lichtstrahl auf die Konversionseinrichtung reflektiert wird. Eine Strahlbreite des von der Leitoptik abgestrahlten Primärlichtstrahls oder Primärlichtbündels mag insbesondere einen Durchmesser des praktisch nutzbaren Brennflecks nicht überschreiten. Ein Durchmesser des Brennflecks beträgt beispielsweise 2 mm oder weniger, insbesondere 1 mm oder weniger.

Die Leitoptik mag ein oder mehrere optische Elemente aufweisen. Die Leitoptik ändert den von der mindestens einen Primärlichtquelle abgestrahlten Primärlichtstrahl, z.B. indem es den mindestens einen Primärlichtstrahl umlenkt und/oder in seiner Breite begrenzt. Die Leitoptik mag dazu mindestens eine Linse, mindestens einen Reflektor, mindestens einen Lichtleiter, mindestens einen Diffusor, mindestens eine Blende usw. aufweisen. Die Leitoptik mag zusätzlich oder alternativ mindestens eine Sammeloptik aufweisen, z.B. um die Lichtstrahlen mehrerer Lichtquellen zusammenzuführen.

Beispielsweise bei einer ausreichend genauen Richtung und Fokussierung des von der mindestens einen Lichtquelle abgestrahlten Primärlichtstrahls auf den ersten Brennfleck kann auf die Leitoptik auch verzichtet werden. Insbesondere für diesen Fall mag der erste Teilbereich des Reflektors auch einer Strahlaufweitung des Primärlichtstrahls dienen.

Die Konversionseinrichtung weist zum zumindest teilweisen Konvertieren des Primärlichts mindestens einen Leuchtstoff auf. Der Leuchtstoff mag z.B. ein das Primärlicht (z.B. UV-Licht oder blaues Licht) in grünes Sekundärlicht, gelbes Sekundärlicht, rotes Sekundärlicht, IR-Licht usw. umwandelnder Stoff sein. Wird das Primärlicht nicht vollständig umgewandelt, kann es zusammen mit Sekundärlicht als Mischlicht genutzt werden. Beispielsweise mag nicht umgewandeltes blaues Primärlicht zusammen mit gelbem Sekundärlicht ein weißes Mischlicht ergeben. Ein zusätzlicher Anteil von rotem Sekundärlicht ergibt eine wärmere Farbtemperatur (z.B. "warm-weiß") usw.

Die Konversionseinrichtung ist von der Lichtquelle entfernt angeordnet, was bei einer Verwendung einer Laserlichtquelle auch als LARP (Laser Activated Remote Phosphor) bezeichnet werden kann. Die entfernte Anordnung des Leuchtstoffs von der Lichtquelle weist den Vorteil einer verbesserten Möglichkeit zur Ableitung von Wärme von dem Leuchtstoff auf. Zudem kann hierbei eine Fläche des eingestrahlten Primärlichts einfach vergrößert werden, so dass eine Schädigung des Leuchtstoffs noch sicherer verhindert wird.

Dass der zweite Teilbereich des Reflektors ein für den zweiten Brennfleck rückreflektierender Teilbereich ist, bedeutet insbesondere, dass Licht, welches aus dem zweiten Brennfleck auf den zweiten Teilbereich des Reflektors gestrahlt wird, in den zweiten Brennfleck zurückreflektiert wird.

Es ist eine Ausgestaltung, dass der erste Teilbereich und der zweite Teilbereich des Reflektors aneinander angrenzen, wodurch sich eine große Fläche für den zweiten Teilbereich erreichen lässt.

Es ist auch eine Ausgestaltung, dass der erste Teilbereich eine elliptische Grundform aufweist. Die elliptische Grundform mag geringfügig von einer genauen elliptischen Form abweichen, ohne die Funktionalität der elliptischen Form zu verlieren, z.B. das Vorhandensein zweier beabstandeter Brennflecke. Die elliptische Grundform umfasst die genaue elliptische Form. Die elliptische Grundform weist den Vorteil auf, auf einfache Weise zwei Brennpunkte bereitzustellen.

Es ist noch eine Ausgestaltung, dass der zweite Teilbereich eine sphärische Grundform aufweist. Die sphärische Grundform mag geringfügig von einer genauen sphärischen Form abweichen, ohne die Funktionalität der sphärischen Form zu verlieren. Die sphärische Grundform umfasst die genaue sphärische Form. Die sphärische Grundform weist den Vorteil auf, auf von dem zweiten Brennfleck darauf auftreffende Lichtstrahlen direkt wieder in den zweiten Brennfleck zurückreflektieren zu können.

Es ist eine weitere Ausgestaltung, dass der erste Teilbereich einem Beleuchtungsbereich oder Lichtfleck des von der Leitoptik abgestrahlten Primärlichts auf dem Reflektor entspricht. Dadurch kann ein Flächenanteil des zweiten Teilbereichs besonders groß ausgebildet werden. Der erste Teilbereich ist in anderen Worten an der Fläche des Reflektors ausgebildet, auf welchen das von der Leitoptik abgestrahlte Primärlicht zuerst trifft. Eine Grenze oder ein Übergang zwischen dem ersten Teilbereich und dem zweiten Teilbereich mag beispielsweise dort vorliegen, wo eine Intensität des von der Leitoptik abgestrahlten Primärlichtstrahls nicht mehr als 10%, insbesondere nicht mehr als 5%, insbesondere nicht mehr als 2%, insbesondere nicht mehr als 1%, insbesondere nicht mehr als 0,1% einer maximalen Strahlintensität oder einer maximalen Helligkeit beträgt. So kann eine Streustrahlung in einen Bereich außerhalb des zweiten Brennflecks gering gehalten, insbesondere praktisch vermieden werden. Besonders bevorzugt befindet sich die Grenze dort, wo gerade keine von der Leitoptik abgestrahlte Primärlichtstrahlung mehr feststellbar ist. Dabei kann auch gezielt ein Toleranzbereich vorgesehen sein, z.B. mit einer Breite zwischen 0,5 mm und 1 mm.

Es ist eine weitere Ausgestaltung, dass die Leitoptik mindestens einen Lichtleiter aufweist, dessen Lichtaustrittsfläche an dem ersten Brennfleck angeordnet ist. Dies ermöglicht einen besonders einfach umsetzbaren Primärlichteintritt in den ersten Brennfleck. Insbesondere kann so auf einfache Weise ein komplizierter Lichtpfad zu dem ersten Brennfleck hin umgesetzt werden.

Es ist eine Weiterbildung, dass der Lichtleiter ein Hohlleiter ist, z.B. ein gerades oder gekrümmtes Rohr. Der Hohlleiter mag innenseitig verspiegelt sein.

Es ist noch eine Weiterbildung, dass der Lichtleiter ein Lichtwellenleiter (LWL) oder eine Lichtleitfaser ist. Der Lichtleiter mag beispielsweise aus Glas oder aus Kunststoff bestehen.

Der Lichtleiter mag auch als ein kompakter (nicht hohler) Stab ausgebildet sein. Die Verwendung eines Stabs weist den Vorteil auf, dass er selbsttragend und folglich besonders einfach und stabil verbaubar und positionierbar ist. Ein weiterer Vorteil ist die Möglichkeit, mit geringem Aufwand eine Außenkontur zu formen. Zudem mag der Stab biegsam ausgebildet sein.

Es ist noch eine weitere Ausgestaltung, dass der Lichtleiter als ein Lichtmischleiter ausgebildet ist. Dadurch wird eine gleichförmigere Bestrahlung der Konversionseinrichtung ermöglicht. Unter einem Lichtmischleiter mag insbesondere ein Lichtleiter verstanden werden, dessen Lichtverteilung an seiner Lichtaustrittsfläche gleichförmiger ist als an seiner Lichteintrittsfläche, da sich Licht in ihm mischt. Die Gleichförmigkeit oder Homogenität mag insbesondere eine Intensität oder Helligkeit des Primärlichts betreffen, bei einem mehrfarbigen Primärlicht alternativ oder zusätzlich die Farbverteilung. Der Lichtmischleiter weist den weiteren Vorteil auf, dass ein Fokuspunkt des Primärlichtstrahls an der Lichteintrittsfläche nicht genau positioniert zu werden braucht, um eine gleichmäßige Lichtverteilung an der Lichtaustrittsfläche zu bewirken. Dadurch wird eine deutlich bessere Toleranzunempfindlichkeit des Primärlichts ermöglicht. Eine geringere Variabilität der Position des Leuchtflecks an der Lichtaustrittsfläche wiederum bewirkt, dass auch eine Position eines Primärlichtflecks auf dem Leuchtstoff unabhängig von der genauen Position des Fokuspunktes der Primärstrahlung am Eingang des Lichtmischleiters ist. So kann z.B. bei einem Fahrzeugscheinwerfer eine geringere Streuung der Lichtverteilung auf der Straße erreicht werden.

Es ist ferner eine Ausgestaltung, dass der Lichtleiter eine eckige Querschnittsform aufweist. Diese erzeugt eine verbesserte Lichtmischung und damit höhere Gleichförmigkeit an der Lichtaustrittsfläche als bei einer nicht eckigen Querschnittsform. Die eckige Querschnittsform mag z.B. eine rechteckige, insbesondere quadratische, oder eine hexagonale Querschnittsform umfassen. Grundsätzlich sind aber auch nichteckige Querschnittsformen möglich, z.B. eine kreisrunde, ovale oder elliptische Querschnittsform. Insbesondere bei dieser Ausgestaltung mag der Lichtleiter ein stabförmiger Lichtleiter sein.

Die Konversionseinrichtung mag einen transmittierenden Aufbau aufweisen, bei dem wellenlängenumgewandeltes Licht und ggf. durch die Konversionseinrichtung hindurchgelaufenes Primärlicht an einer Seite (z.B. einer "Rückseite") der Konversionseinrichtung als Nutzlicht abgreifbar ist, welche einer Seite (z.B. einer "Vorderseite"), auf welche das Primärlicht einstrahlt, abgewandt ist. Von der Vorderseite abgestrahltes Licht kann dann, wenn es auf den zweiten Teilbereich des Reflektors fällt, wieder zurückreflektiert und (ggf. nach einer Wellenlängenumwandlung) zumindest teilweise an der Rückseite als Nutzlicht gewonnen werden.

Die Konversionseinrichtung mag auch einen reflektierenden Aufbau aufweisen, bei dem wellenlängenumgewandeltes Sekundärlicht und ggf. nicht umgewandeltes Primärlicht an einer Seite (z.B. der Vorderseite) der Konversionseinrichtung innerhalb eines vorbestimmten Raumwinkels als Nutzlicht abgreifbar ist, wobei das Primärlicht auf die gleiche Seite einstrahlt. Von der Vorderseite abgestrahltes Licht kann dann, wenn es nicht in den zum Nutzlichtabgriff vorgesehenen Raumwinkel, sondern auf den zweiten Teilbereich fällt, wieder zurückreflektiert und (ggf. nach einer Wellenlängenumwandlung) zumindest teilweise als Nutzlicht gewonnen werden.

Es ist auch eine Ausgestaltung, dass die Konversionseinrichtung eine wellenlängenkonvertierende Leuchtstoffschicht aufweist. Die Verwendung einer Schicht bewirkt den Vorteil, dass eine nur geringe Lichtabsorption darin auftritt. Die Leuchtstoffschicht mag einen oder mehrere Leuchtstoffe aufweisen. Die Leuchtstoffschicht mag sich zumindest teilweise innerhalb des zweiten Brennflecks befinden. Um interne Absorptionsverluste gering zu halten, und Material zu sparen und um eine gute Eignung für einen transmittierenden Aufbau zu erreichen, weist die Leuchtstoffschicht ein geringe Dicke auf, insbesondere von 1 mm oder weniger, insbesondere von 0,8 mm oder weniger, insbesondere von 0,5 mm oder weniger.

Es ist außerdem eine Ausgestaltung, dass die Leuchtstoffschicht auf einem lichtdurchlässigen Träger aufgebracht ist. So lässt sich eine Ausgestaltung der Konversionseinrichtung mit einem transmittierenden Aufbau erleichtern. Der Träger liegt insbesondere als ein dünnes Plättchen vor, um Lichtverluste gering zu halten.

Es ist eine Weiterbildung, dass der Träger ein Saphirträger ist. Dieser ist lichtdurchlässig und ermöglicht aufgrund seiner hohen Wärmeleitfähigkeit eine effektive Wärmeableitung von dem Leuchtstoff. Der Saphirträger kann also auch als Kühlkörper wirken. Er mag an einen Kühlkörper und/oder an eine Kühlquelle (z.B. ein Peltierelement) angeschlossen sein.

Es ist zudem eine Ausgestaltung, dass der Träger in einem Lichtpfad des Primärlichts vor der Leuchtstoffschicht angeordnet ist. So lässt sich eine besonders verlustarme Abstrahlung des Sekundärlichts erreichen. Von dem Reflektor auf die Konversionseinrichtung abgestrahltes Sekundärlicht trifft also bei einem transmittierenden Aufbau zunächst auf einen Lichteintrittsbereich des Trägers, z.B. seine Vorderseite, und durchläuft ihn dann. Der Leuchtstoff, insbesondere die Leuchtstoffschicht, ist an einem Lichtaustrittsbereich des Trägers, z.B. an seiner Rückseite, angeordnet. Dabei kann es von dem Leuchtstoff ausgehend zu einer Rückstrahlung von ggf. nicht umgewandeltem, aber an dem Leuchtstoff gestreutem Primärlicht in Richtung des Trägers kommen. Zudem mag das Primärlicht durch Reflexion an Grenzflächen des Trägers in den Reflektor zurückgeworfen werden, ohne dass es in den Leuchtstoff eintritt. Darüber hinaus wird von der Leuchtstoffschicht typischerweise ein Teil des dort erzeugten Sekundärlichts in Richtung des Trägers abgestrahlt und mag auf den Reflektor fallen.

Ohne weitere Maßnahmen würde das von der Konversionseinrichtung auf den Reflektor zurückgeworfene Licht zumindest größtenteils verloren gehen. Durch die Verwendung des oben beschriebenen Reflektors wird jedoch derjenige Teil des zurückgeworfenen Lichts, der auf den zweiten Teilbereich fällt, wieder in Richtung der Konversionseinrichtung, insbesondere auf die Leuchtstoffschicht, zurückreflektiert und kann somit erneut genutzt werden.

Es ist eine zur weiteren Verringerung von Lichtverlusten und damit zur Erhöhung einer Leuchtdichte vorteilhafte Ausgestaltung, dass der Träger mit einer dichroitischen Beschichtung versehen ist, welche für das Primärlicht praktisch vollständig durchlässig ist und welche das Sekundärlicht praktisch vollständig reflektiert. Dadurch wird nur an der Leuchtstoffschicht gestreutes, nicht umgewandeltes Primärlicht durch den Träger auf den Reflektor zurückgeworfen, während das Sekundärlicht vollständig als Nutzlicht auskoppelbar ist. Die dichroitische Beschichtung mag beispielsweise als ein Schichtstapel mit alternierenden Schichten ausgebildet sein.

Es ist ferner eine Weiterbildung, dass der Träger mit einer Antireflexbeschichtung versehen ist, um Lichtverluste durch Grenzflächenreflexion zu unterdrücken und somit Lichtverluste (Fresnelverluste) noch weiter zu verringern. Die Antireflexbeschichtung mag insbesondere an einer dem Reflektor zugewandten Fläche vorhanden sein, z.B. an einer Vorderseite eines plättchenförmigen Trägers, um Lichtverluste durch Grenzflächenreflexion besonders gering halten zu können. Auch die Leuchtstoffschicht mag mit einer Antireflexbeschichtung versehen sein.

Es ist darüber hinaus eine Ausgestaltung, dass die Konversionseinrichtung eine konvertierende Leuchtstoffschicht aufweist, welche auf einem reflektierenden Träger aufgebracht ist. Diese ist besonders geeignet für einen reflektierenden Aufbau.

Es ist noch eine Ausgestaltung, dass die mindestens eine Lichtquelle mindestens eine Halbleiterlichtquelle aufweist. Die mindestens eine Halbleiterlichtquelle mag beispielsweise mindestens eine Leuchtdiode aufweisen. Bei Vorliegen mehrerer Leuchtdioden können diese in der gleichen Primärfarbe oder in verschiedenen Primärfarben leuchten. Auch kann das von der mindestens einen Leuchtdiode abgestrahlte Licht ein infrarotes Licht (IR-LED) oder ein ultraviolettes Licht (UV-LED) sein. Die mindestens eine Leuchtdiode kann selbst mindestens einen wellenlängenumwandelnden Leuchtstoff enthalten (Konversions-LED). Die mindestens eine Leuchtdiode kann in Form mindestens einer einzeln gehäusten Leuchtdiode oder in Form mindestens eines LED-Chips vorliegen. Mehrere LED-Chips können auf einem gemeinsamen Substrat ("Submount") montiert sein. Die mindestens eine Leuchtdiode kann mit mindestens einer eigenen und/oder gemeinsamen Optik zur Strahlführung ausgerüstet sein, z.B. mindestens einer Fresnel-Linse, Kollimator, und so weiter. Anstelle oder zusätzlich zu anorganischen Leuchtdioden, z.B. auf Basis von InGaN oder AlInGaP, sind allgemein auch organische LEDs (OLEDs, z.B. Polymer-OLEDs) einsetzbar. Alternativ kann die mindestens eine Halbleiterlichtquelle z.B. mindestens einen Laser darstellen, z.B. ein Diodenlaser sein. Bei Verwendung eines Lasers kann die Beleuchtungsvorrichtung auch als eine LARP-Vorrichtung angesehen werden. Die Beleuchtungsvorrichtung ist jedoch nicht auf Halbleiterlichtquellen beschränkt und mag z.B. auch andere Laser aufweisen.

Es ist noch eine Ausgestaltung, dass die Beleuchtungsvorrichtung einen Teil einer Fahrzeugbeleuchtung darstellt. Beispielsweise mag die Beleuchtungsvorrichtung ein Modul oder eine Light Engine als ein Bestandteil einer Fahrzeugbeleuchtung darstellen. Die Fahrzeugbeleuchtung mag insbesondere zur Umgebungs- oder Umfeldbeleuchtung dienen. Die Fahrzeugbeleuchtung mag z.B. ein Scheinwerfer sein, beispielsweise zum Erzeugen eines Abblendlichts, eines Fernlichts, eines Nebellichts, eines Zusatzlichts und/oder eines Kurvenlichts usw. Die Fahrzeugbeleuchtung mag ferner eine Tagfahrleuchte, ein Fahrtrichtungsanzeiger, ein Bremslicht, ein Rücklicht usw. sein.

Die Fahrzeugbeleuchtung mag eine Beleuchtungsvorrichtung für ein Wasserfahrzeug, ein Luftfahrzeug und/oder ein landgestütztes Fahrzeug sein. Das landgestützte Fahrzeug mag ein Kraftfahrzeug sein, z.B. ein Personenkraftwagen, ein Lastkraftwagen oder ein Motorrad.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

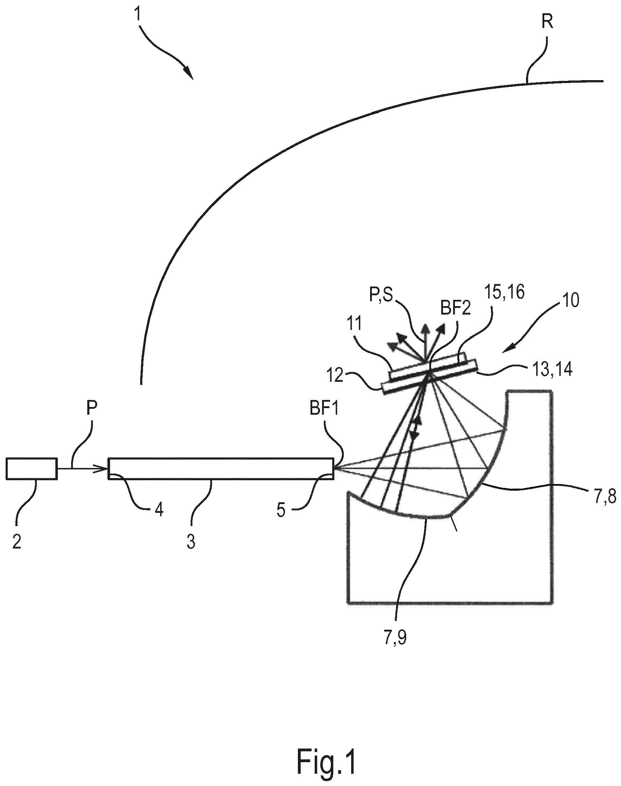

- Fig.1 bis 3: zeigen als Schnittdarstellung in Seitenansicht Beleuchtungsvorrichtungen gemäß einem ersten, zweiten bzw. dritten Ausführungsbeispiel.

**Fig.1** zeigt als Schnittdarstellung in Seitenansicht eine Beleuchtungsvorrichtung 1 gemäß einem ersten Ausführungsbeispiel. Die Beleuchtungsvorrichtung 1 weist eine Primärlichtquelle in Form eines Lasers 2 auf, welcher blaues Primärlicht P in eine Leitoptik einstrahlt. Die Leitoptik ist hier als ein Lichtmischleiter in Form eines Lichtmischstabs 3 aus lichtdurchlässigem Glas oder Kunststoff ausgebildet. Als eine Lichteintrittsfläche für das Primärlicht P dient eine erste Stirnfläche 4 des Lichtmischstabs 3. Das Primärlicht P durchläuft den Lichtmischstab 3 in seiner Längsrichtung und wird dabei gemischt. An der als Lichtaustrittsfläche dienenden zweiten Stirnfläche 5 des Lichtmischstabs 3 ergibt sich ein in Bezug auf seine Intensität vergleichmäßigter Lichtfleck. Dieser Lichtfleck ist weitgehend unabhängig von einer genauen Position des Primärlichtstrahls P an der ersten Stirnfläche 3. Zur Unterstützung eines homogenen Lichtflecks an der zweiten Stirnfläche 5 ist eine Querschnittsform des Lichtmischstabs 3 eckig, z.B. rechteckig oder hexagonal geformt.

Die zweite Stirnfläche 5 befindet sich an einem ersten Brennfleck BF1 (z.B. einem Bereich mit einem Durchmesser von ca. 1 mm mit dem ersten Brennpunkt als Mittelpunkt) eines elliptischen ersten Teilbereichs 8 eines Reflektors 7. Der Reflektor 7 ist insbesondere spekular bzw. spiegelnd reflektierend ausgebildet und stellt somit einen Umlenkspiegel dar. Ein zweiter Brennfleck BF2 des ersten Teilbereichs 8 ist von dem ersten Brennfleck BF 1 beabstandet.

An den ersten Teilbereich 8 schließt sich ein zweiter Teilbereich 9 mit einer sphärischen Grundform an. Der einzige Brennfleck des zweiten Teilbereichs 9 entspricht dem zweiten Brennfleck BF2 des ersten Teilbereichs 8. An dem zweiten Brennfleck BF2 befindet sich eine Leuchtstoffschicht 11 einer Konversionseinrichtung 10. Von der zweiten Stirnfläche 5 des Lichtmischstabs 3 abgestrahltes Primärlicht P trifft nur auf den ersten Teilbereich 8, nicht auf den zweiten Teilbereich 9. Der erste Teilbereich 8 entspricht also mindestens einem Beleuchtungsbereich des von dem Lichtmischstab 3 abgestrahlten Primärlichts P auf dem Reflektor 7.

Von dem ersten Teilbereich 8 wird das Primärlicht P auf den zweiten Brennfleck BF2 umgelenkt und trifft dabei auf die Konversionseinrichtung 10. Die Konversionseinrichtung 10 weist außer der Leuchtstoffschicht 11 einen plättchenförmigen, transparenten Träger 12 z.B. aus Saphir auf. Eine Vorderseite 13 des Trägers 12 ist dem Reflektor 7 zugewandt und ist mit einer Antireflexschicht 14 belegt. Eine Rückseite 15 des Trägers 12 ist mit einer dichroitischen Beschichtung 16 belegt, welche das Primärlicht P praktisch vollständig (d.h. vollständig bis auf praktisch vernachlässigbare Verluste) durchlässt.

Die Leuchtstoffschicht 11 ist auf der dichroitischen Beschichtung 16 aufgebracht und wandelt das durch die dichroitische Beschichtung 16 durchgelassene Primärlicht P zumindest teilweise in Sekundärlicht S größerer Wellenlänge um, z.B. in gelbes Sekundärlicht. Dieser Aufbau entspricht einem transmittierenden Aufbau. Die dichroitische Beschichtung 16 ist für das Sekundärlicht S reflektierend ausgestaltet, so dass es keine Lichtverluste durch Rückstreuung erleidet.

Insbesondere mag ein Leuchtstoff gelbes Sekundärlicht S erzeugen, welches zusammen mit nicht umgewandeltem oder nicht konvertiertem blauen Primärlicht P ein gelb-blaues oder weißes Mischlicht P, S ergibt. Das Mischlicht P, S kann weiter als Nutzlicht ausgekoppelt werden, z.B. mittels eines optisch nachgeschalteten Reflektors R.

Die Leuchtstoffschicht 11 mag bei Bedarf zwei oder noch mehr Leuchtstoffe aufweisen, welche das Primärlicht P oder zuvor umgewandeltes Sekundärlicht S weiter umwandeln.

Von der Leuchtstoffschicht 11 durch die dichroitische Beschichtung 16 auf den zweiten Teilbereich 9 des Reflektors 7 zurückgestreutes Primärlicht P wird auf den zweiten Brennfleck BF2 zurückreflektiert und kann dort wieder in die Leuchtstoffschicht 11 eintreten. So werden Lichtverluste weiter verringert und eine Leuchtdichte und Systemeffizienz erhöht.

Die Beleuchtungsvorrichtung 1 mag z.B. einen Teil eines Fahrzeugscheinwerfers darstellen, z.B. zum Erzeugen eines Zusatzlichts, eines Nebellichts, eines Fernlichts, eines Abblendlichts, eines Kurvenlichts usw.

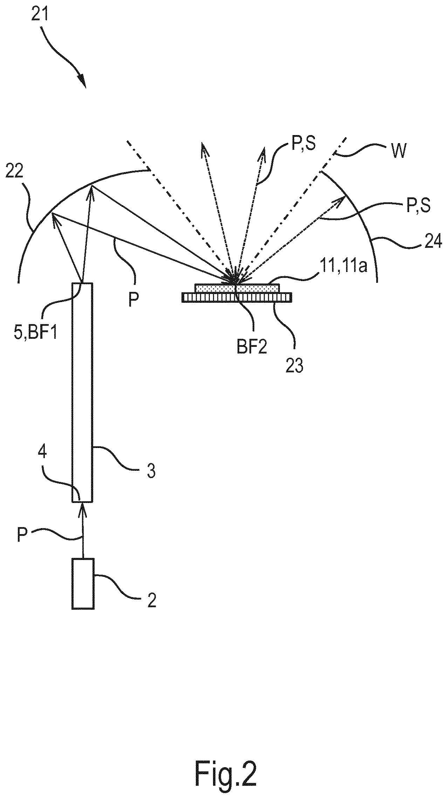

**Fig.2** zeigt als Schnittdarstellung in Seitenansicht eine Beleuchtungsvorrichtung 21 gemäß einem zweiten Ausführungsbeispiel. Die Beleuchtungsvorrichtung 21 weist einen reflektierenden Aufbau auf, bei dem von einem ersten reflektierenden Teilbereich 22 mit elliptischer Grundform reflektiertes Primärlicht P direkt auf eine Leuchtstoffschicht 11 fällt, nämlich hier auf eine Vorderseite 11a. Die Leuchtstoffschicht 11 ist mit ihrer Rückseite auf einem reflektierenden Träger 23 aufgebracht und bildet mit diesem eine Konversionseinrichtung 11, 23. Der Träger 23 mag z.B. aus Metall bestehen, um als effektiver und preiswerter Kühlkörper wirken zu können. Von der Leuchtstoffschicht 11 abgestrahltes und auf den Träger 23 treffendes Licht (z.B. sowohl Primärlicht P als auch Sekundärlicht S) wird in die Leuchtstoffschicht 11 zurückreflektiert, so dass Lichtverluste an dem Träger 23 vermieden werden.

Zur noch weiteren Vermeidung von Lichtverlusten mag auch die Vorderseite 11a der Leuchtstoffschicht 11 mit einer Antireflexlage beschichtet sein (o. Abb.).

Das von der Leuchtstoffschicht 11 innerhalb eines vorbestimmten Raumwinkelbereichs W von der der Vorderseite 11a abgestrahlte Mischlicht P, S kann als Nutzlicht weiterverwendet werden. An einem neben dem ersten reflektierenden Teilbereich 22 und dem Raumwinkelbereich W liegender Raumwinkelbereich kann ein zweiter reflektierender Teilbereich 24 mit z.B. sphärischer Grundform angeordnet sein. Der zweite Teilbereich 24 mag insbesondere außerhalb des Raumwinkelbereichs W abgestrahltes Licht (z.B. sowohl Primärlicht P als auch Sekundärlicht S) zurück auf die Leuchtstoffschicht 11 reflektieren, von wo aus es wieder zumindest teilweise in den Raumwinkelbereich W abstrahlbar ist. So können auch bei einem reflektierenden Aufbau Lichtverluste weiter reduziert werden.

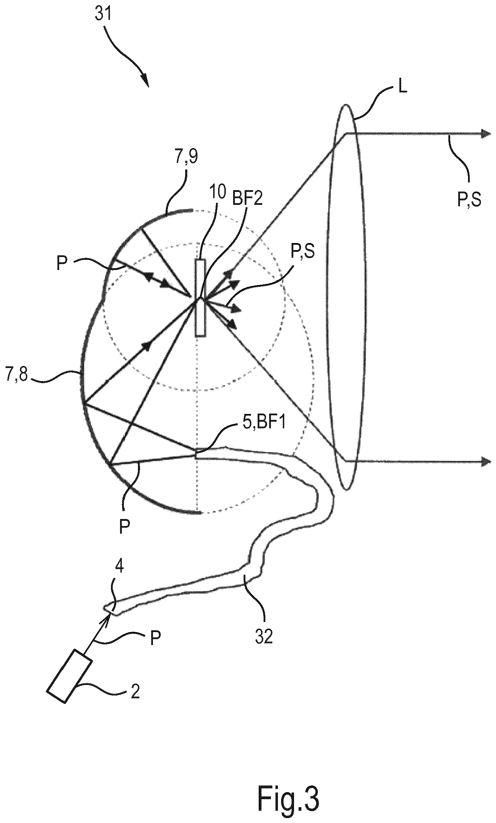

**Fig.3** zeigt als Schnittdarstellung in Seitenansicht eine Beleuchtungsvorrichtung 31 gemäß einem dritten Ausführungsbeispiel. Die Beleuchtungsvorrichtung 31 weist ähnlich zu der Beleuchtungsvorrichtung 1 einen transmittierenden Aufbau auf. Im Gegensatz zu der Beleuchtungsvorrichtung 1 ist die Leitoptik hier als ein Lichtmischleiter in Form eines leicht biegsamen Lichtwellenleiters 32 aus lichtdurchlässigem Glas oder Kunststoff ausgebildet. Der Lichtwellenleiter 32 weist ein oder mehrere lichtleitende Fasern auf. Der Lichtwellenleiter 32 kann besonders vielgestaltig verlegt werden und verringert dadurch eine Abhängigkeit einer Position der mindestens einen Lichtquelle von einer Position und Erreichbarkeit des ersten Brennflecks BF1.

Zudem zeigt die Optik, die zur Auskopplung des von der Konversionseinrichtung 10 als Nutzlicht abgestrahlten Mischlichts P, S verwendet wird, nun eine Linse L.

Gezeigt ist ferner als gestrichelte Linie eine Schnittkontur einer dem ersten Teilbereich 8 des Reflektors 7 zugehörigen Ellipse mit ihrer großen Halbachse, auf welcher die Brennpunkte BF1 und BF2 liegen. Auch eingezeichnet ist als gestrichelte Linie eine Schnittkontur eines dem zweiten Teilbereich 9 des Reflektors 7 zugehörigen Kreises.

Obwohl die Erfindung im Detail durch die gezeigten Ausführungsbeispiele näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichen

- 1: Beleuchtungsvorrichtung
- 2: Laser
- 3: Lichtmischstab
- 4: Erste Stirnfläche des Lichtmischstabs
- 5: Zweite Stirnfläche des Lichtmischstabs
- 7: Reflektor
- 8: Erster Teilbereich des Reflektors
- 9: Zweiter Teilbereich des Reflektors
- 10: Konversionseinrichtung
- 11: Leuchtstoffschicht
- 11a: Vorderseite der Leuchtstoffschicht
- 12: Träger
- 13: Vorderseite des Trägers
- 14: Antireflexschicht
- 15: Rückseite des Trägers
- 16: Dichroitische Beschichtung
- 21: Beleuchtungsvorrichtung
- 22: Erster reflektierender Teilbereich
- 23: Träger
- 24: Zweiter reflektierender Teilbereich
- 31: Beleuchtungsvorrichtung
- 32: Lichtwellenleiter
- BF1: erster Brennfleck
- BF2: zweiter Brennfleck
- L: Linse
- P: Primärlicht
- R: Reflektor
- S: Sekundärlicht
- W: Raumwinkelbereich

## Patentansprüche

1. Beleuchtungsvorrichtung (1; 21; 31), aufweisend
- mindestens eine Primärlichtquelle (2) zur Erzeugung von Primärlicht (P),
- einen Reflektor (7-9; 22, 24) mit zwei beabstandeten Brennflecken (BF1, BF2), wobei der Reflektor (7-9; 22, 24) einen ersten reflektierenden Teilbereich (8; 22) aufweist, dem die zwei Brennflecken (BF1, BF2) zugeordnet sind,
- eine Konversionseinrichtung (10-16; 11, 23) zum zumindest teilweisen Konvertieren des Primärlichts (P) in Sekundärlicht (S) unterschiedlicher Wellenlänge, welche sich an dem zweiten Brennfleck (BF2) befindet,
und wobei das von der mindestens einen Primärlichtquelle (2) abgestrahlte Primärlicht (P) auf den ersten Teilbereich (8; 22) fällt,
**dadurch gekennzeichnet, dass**
die Beleuchtungsvorrichtung (1; 21; 31) eine der mindestens einen Primärlichtquelle (2) nachgeschaltete Leitoptik (3; 32) zum Leiten des Primärlichts (P) zu dem ersten Brennfleck (BF1) des Reflektors (7-9; 22, 24) aufweist und der Reflektor (7-9; 22, 24) einen zweiten reflektierenden Teilbereich (9; 24) aufweist, welcher ein für den zweiten Brennfleck (BF2) rückreflektierender Teilbereich ist.

2. Beleuchtungsvorrichtung (1; 21; 31) nach Anspruch 1, wobei der erste Teilbereich (8; 22) eine elliptische Grundform aufweist und der zweite Teilbereich (9; 24) eine sphärische Grundform aufweist.

3. Beleuchtungsvorrichtung (1; 21; 31) nach Anspruch 2, wobei der erste Teilbereich (8; 22) einem Beleuchtungsbereich des von der Leitoptik (3; 32) abgestrahlten Primärlichts auf dem Reflektor (7-9; 22, 24) entspricht.

4. Beleuchtungsvorrichtung (1; 21; 31) nach einem der vorhergehenden Ansprüche, wobei die Leitoptik (3; 32) mindestens einen Lichtleiter aufweist, dessen Lichtaustrittsfläche (5) an dem ersten Brennfleck angeordnet ist.

5. Beleuchtungsvorrichtung (1; 21; 31) nach Anspruch 4, wobei der Lichtleiter (3) als ein Lichtmischleiter ausgebildet ist.

6. Beleuchtungsvorrichtung (1; 21) nach Anspruch 5, wobei der Lichtleiter (3) eine eckige Querschnittform aufweist.

7. Beleuchtungsvorrichtung (1; 31) nach einem der vorhergehenden Ansprüche, wobei die Konversionseinrichtung (10) eine konvertierende Leuchtstoffschicht (11) aufweist, welche auf einem lichtdurchlässigen Träger (12) aufgebracht ist.

8. Beleuchtungsvorrichtung (1; 31) nach Anspruch 7, wobei
- der Träger (12) in einem Lichtpfad des Primärlichts (P) vor der Leuchtstoffschicht (11) angeordnet ist und
- der Träger (12) mit einer dichroitischen Beschichtung (16) versehen ist, welche für das Primärlicht (P) durchlässig ist und das Sekundärlicht (S) reflektiert.

9. Beleuchtungsvorrichtung (21) nach einem der Ansprüche 1 bis 6, wobei die Konversionseinrichtung (11, 23) eine konvertierende Leuchtstoffschicht (11) aufweist, welche auf einem reflektierenden Träger (23) aufgebracht ist.

10. Beleuchtungsvorrichtung (1; 21; 31) nach einem der vorhergehenden Ansprüche, wobei die mindestens eine Lichtquelle (2) mindestens eine Halbleiterlichtquelle aufweist.

11. Beleuchtungsvorrichtung (1; 21; 31) nach einem der vorhergehenden Ansprüche, wobei die Beleuchtungsvorrichtung (1; 21; 31) einen Teil einer Fahrzeugbeleuchtung darstellt.

12. Beleuchtungsvorrichtung (1; 21; 31) nach einem der vorhergehenden Ansprüche, wobei der erste reflektierenden Teilbereich (8; 22) und der zweite reflektierenden Teilbereich (9; 24)aneinander angrenzen.

## Claims

1. Lighting apparatus (1; 21; 31), comprising
- at least one primary light source (2) for producing primary light (P),
- a reflector (7-9; 22, 24) with two spaced apart focal spots (BF1, BF2), the reflector (7-9; 22, 24) having a first reflecting portion (8; 22), to which the two focal spots (BF1, BF2) are assigned,
- a conversion device (10-16; 11, 23) for at least partial conversion of the primary light (P) into secondary light (S) of a different wavelengths, situated at the second focal spot (BF2),
and wherein the primary light (P) emitted by the at least one primary light source (2) impinges on the first portion (8; 22),
**characterized in that**
the lighting apparatus (1; 21; 31) comprises a guiding optical unit (3; 32), disposed downstream of the at least one primary light source (2), for guiding the primary light (P) to the first focal spot (BF1) of the reflector (7-9; 22, 24) and the reflector (7-9; 22, 24) has a second reflecting portion (9; 24), which is a back-reflecting portion for the second focal spot (BF2).

2. Lighting apparatus (1; 21; 31) according to Claim 1, wherein the first portion (8; 22) has an elliptical basic shape and the second portion (9; 24) has a spherical basic shape.

3. Lighting apparatus (1; 21; 31) according to Claim 2, wherein the first portion (8; 22) corresponds to a region on the reflector (7-9; 22, 24) illuminated by the primary light emitted from the guiding optical unit (3; 32).

4. Lighting apparatus (1; 21; 31) according to any one of the preceding claims, wherein the guiding optical unit (3; 32) comprises at least one light guide, the light emergence face (5) of which is arranged at the first focal spot.

5. Lighting apparatus (1; 21; 31) according to Claim 4, wherein the light guide (3) is configured as a light mixing guide.

6. Lighting apparatus (1; 21) according to Claim 5, wherein the light guide (3) has a polygonal cross-sectional shape.

7. Lighting apparatus (1; 31) according to any one of the preceding claims, wherein the conversion device (10) comprises a converting phosphor layer (11), which is applied to a light-transmissive mount (12).

8. Lighting apparatus (1; 31) according to Claim 7, wherein
- the mount (12) is disposed upstream of the phosphor layer (11) in a light path of the primary light (P) and
- the mount (12) is provided with a dichroic coating (16), which transmits the primary light (P) and reflects the secondary light (S).

9. Lighting apparatus (21) according to any one of Claims 1 to 6, wherein the conversion device (11, 23) comprises a converting phosphor layer (11), which is applied to a reflecting mount (23).

10. Lighting apparatus (1; 21; 31) according to any one of the preceding claims, wherein the at least one light source (2) comprises at least one semiconductor light source.

11. Lighting apparatus (1; 21; 31) according to any one of the preceding claims, wherein the lighting apparatus (1; 21; 31) constitutes a part of an automotive lighting system.

12. Lighting apparatus (1; 21; 31) according to any one of the preceding claims, wherein the first reflecting portion (8; 22) and the second reflecting portion (9; 24) adjoin one another.

## Revendications

1. Dispositif d'éclairage (1; 21; 31) comprenant:
- au moins une source lumineuse primaire (2) destinée à la production de lumière primaire (P),
- un réflecteur (7-9; 22, 24) ayant deux taches cathodiques écartées (BF1, BF2), dans lequel le réflecteur (7-9; 22, 24) comprend une première zone partielle réfléchissante (8; 22) à laquelle sont associées les deux taches cathodiques (BF1, BF2),
un appareil de conversion (10-16; 11, 23) destiné à convertir au moins en partie la lumière primaire (P) en lumière secondaire (S) de longueur d'onde différente, qui se trouve sur la deuxième tache cathodique (BF2),
et dans lequel la lumière primaire (P) rayonnant de la au moins une source lumineuse primaire (2) tombe sur la première zone partielle (8; 22),
**caractérisé en ce que**
le dispositif d'éclairage (1; 21; 31) comprend une optique de guidage (3; 32) en aval de la au moins une source lumineuse primaire (2) destinée à guider la lumière primaire (P) à la première tache cathodique (BF1) du réflecteur (7-9; 22, 24) et le réflecteur (7-9; 22, 24) comprend une deuxième zone partielle réfléchissante (9; 24), laquelle est une zone partielle rétroréfléchissante pour la deuxième tache cathodique (BF2).

2. Dispositif d'éclairage (1; 21; 31) selon la revendication 1, dans lequel la première zone partielle (8; 22) présente une forme de base elliptique et la deuxième zone partielle (9; 24) présente une forme de base sphérique.

3. Dispositif d'éclairage (1; 21; 31) selon la revendication 2, dans lequel la première zone partielle (8; 22) correspond à une zone d'éclairage de la lumière primaire rayonnant de l'optique de guidage (3; 32) sur le réflecteur (7-9; 22, 24).

4. Dispositif d'éclairage (1; 21; 31) selon l'une des revendications précédentes, dans lequel l'optique de guidage (3; 32) comprend au moins un guide de lumière dont la surface de sortie de lumière (5) est située sur la première tache cathodique.

5. Dispositif d'éclairage (1; 21; 31) selon la revendication 4, dans lequel le guide de lumière (3) est réalisé en tant que guide de lumière mixte.

6. Dispositif d'éclairage (1; 21) selon la revendication 5, dans lequel le guide de lumière (3) présente une forme transversale carrée.

7. Dispositif d'éclairage (1; 31) selon l'une des revendications précédentes, dans lequel le dispositif de conversion (10) comprend une couche de substance luminescente (11) propre à convertir, laquelle est appliquée sur un support transparent (12).

8. Dispositif d'éclairage (1; 31) selon la revendication 7, dans lequel
- le support (12) est situé dans une trajectoire lumineuse de la lumière primaire (P) devant la couche de substance luminescente (11), et
- le support (12) est muni d'un revêtement (16) dichroïque transparent à la lumière primaire (P) et qui réfléchit la lumière secondaire (S).

9. Dispositif d'éclairage (21) selon l'une des revendications 1 à 6, dans lequel le dispositif de conversion (10) comprend une couche de substance luminescente (11) propre à convertir, laquelle est appliquée sur un support réfléchissant (23).

10. Dispositif d'éclairage (1; 21; 31) selon l'une des revendications précédentes, dans lequel la au moins une source lumineuse (2) comprend au moins une source de lumière semiconductrice.

11. Dispositif d'éclairage (1; 21; 31) selon l'une des revendications précédentes, dans lequel le dispositif d'éclairage (1; 21; 31) fait partie de l'éclairage d'un véhicule.

12. Dispositif d'éclairage (1; 21; 31) selon l'une des revendications précédentes, dans lequel la première zone partielle réfléchissante (8; 22) et la deuxième zone partielle réfléchissante (9; 24) sont contiguës.
